# EUROPEAN PATENT SPECIFICATION

(11) **EP 1 746 881 B1**
(45) Date of publication and mention of the grant of the patent: **21.05.2008**
(21) Application number: 05746964.5
(22) Date of filing: 09.05.2005
(51) Int. Cl.: A01N 27/00, A01N 25/00

(54) **METHOD OF CONTROLLING TERMITES**
TERMITENBEKÄMPFUNGSVERFAHREN
PROCEDE DE REGULATION DES TERMITES

(30) Priority: 11.05.2004 US 569989 P
(43) Date of publication of application: 31.01.2007
(73) Proprietor: Bayer Cropscience LP, Research Triangle Park, NC 27709 (US)
(72) Inventor: BAKER, Robert, Britt, Cary, NC 27511 (US); JAMES, Brian, Ray, Independence, MO 65056 (US); PRICE, David, Adamson, Clayton, NC 27520 (US)
(74) Representative: Bader, Axel Jochen
(86) International application number: PCT/US2005/016078
(87) International publication number: WO 2005/110040

(56) References cited:
- PATENT ABSTRACTS OF JAPAN vol. 012, no. 312 (C-523), 24 August 1988 (1988-08-24) & JP 63 083002 A (SHINTO PAINT CO LTD), 13 April 1988 (1988-04-13)
- BAGNERES A-G ET AL: "INTERSPECIFIC RECOGNITION AMONG TERMITES OF THE GENUS RETICULITERMES: EVIDENCE FOR A ROLE FOR THE CUTICULAR HYDROCARBONS" JOURNAL OF CHEMICAL ECOLOGY, PLENUM PUBLISHING CORPORATION, US, vol. 17, no. 12, 1991, pages 2397-2419, XP009034186 ISSN: 0098-0331

## Description

The present invention relates to a method of controlling termites and other social insects and to compositions therefor.

It is known that certain insecticides are used to control social insects such as termites, ants and wasps. Some insecticides, for example the insect growth regulators, are used in termite baits to reduce and/or eliminate populations of termites. However, a problem in using such baits with insecticides is the reliance on the randomness of foraging of the termites to find the bait and consume it.

Certain mixtures of hydrocarbon compounds of alkanes or alkenes comprising from 20 to 40 carbon atoms may arrest the movement of certain social or subsocial insects. Compositions comprising these certain hydrocarbon compounds and insecticides may be effective to control termites.

The present invention provides a method of controlling termites and other social insects at a locus which comprises:
(a) providing a composition of termite attractant comprising a mixture of hydrocarbon compounds chosen as being alkanes or alkenes comprising from 20 to 40 carbon atoms;
(b) providing a termiticidal composition;
(c) forming at the locus a first location treated with the composition of termite attractant in an amount effective for attracting the termites; and
(d) forming at the locus a second location treated with a termiticidally effective amount of the termiticidal composition wherein the second location is proximate to the first location.

In other words, the present invention provides a method of controlling termites and other social insects at a locus which comprises:
(a) treating a first location at the locus with a composition of termite attractant comprising a mixture of hydrocarbon compounds chosen as being alkanes or alkenes comprising from 20 to 40 carbon atoms in an amount effective for attracting the termites; and
(b) treating a second location at the locus with a termiticidally effective amount of a termiticidal composition, wherein the second location is proximate to the first location.

By the term "attracting" is meant the act of drawing or inducing termites to the locus or location from a point distant from the location or from within the locus. Once termites have found the locus, the method of the invention also envisions an "arrestant" effect wherein the termites so attracted to the locus remain at the locus and forage or remain at or near the locus.

By the term "mixture of hydrocarbon compounds" is preferably meant a mixture of hydrocarbons from 23 to 35 carbon atoms, more preferably from 25 to 27 carbon atoms. More preferably the hydrocarbons are selected from the group 11-methyltetracosane, 5-methylpentacosane, 11-methylpentacosane, 9-pentacosene, n-pentacosane, n-hexacosane, 5,17-dimethylpentacosane and 5-methyltetracosane.

In one embodiment of the present invention either or both the termite attractant composition and the termiticidal composition are sprayed on soil, or alternatively incorporated into soil. The termiticidal composition is preferably substantially non-repellent to termites or other social insects.

In another embodiment, the first location is surrounded by the second location. Either or both the first and second locations may contain a social insect bait, e.g. a termite bait.

A preferred hydrocarbon compound mixture according to the present invention comprises 11-methylpentacosane, (Z)-9-pentacosene, and n-pentacosane (Mixture A). More preferably, the following mixture is used (mixture A-1): 11-methylpentacosane in a proportion ranging from 36 to 51% in weight; (Z)-9-pentacosene in a proportion ranging from 16 to 31 % in weight; and n-pentacosane in a proportion ranging from 26 to 41% in weight. A second preferred group (A-2) generally comprises from 41 to 46 % by weight of 11-methylpentacosane; from 21 to 26 % by weight of 9-pentacosene; and from 31 to 35 % by weight of n-pentacosane.

Another group of preferred hydrocarbon compounds comprises 5-methylpentacosane, 11-methylpentacosane, 9-pentacosene, n-pentacosane and n-hexacosane (Mixture B). A preferred mixture is Mixture B-1 which generally comprises 5-methylpentacosane in a proportion ranging from 4 to 19% in weight; 11-methylpentacosane in a proportion ranging from 29 to 43% in weight; (Z)-9-pentacosene in a proportion ranging from 12 to 27% in weight; n-pentacosane in a proportion ranging from 20 to 35% in weight; and n-hexacosane in a proportion ranging from I to 10% in weight. Mixture B-2 generally comprises from 9 to 14 % by weight of 5-methylpentacosane; from 34 to 38 % by weight of 11-methylpentacosane; from 17 to 22 % in weight of 9-pentacosene; from 25 to 30 % in weight of n-pentacosane; and from 3 to 7% in weight of n-hexacosane.

Another group of preferred hydrocarbons comprises 11-methyltetracosane, 5-methylpentacosane, 11-methylpentacosane, 9-pentacosene, n-pentacosane, n-hexacosane, 5,17-dimethylpentacosane and 5-methyltetracosane (Mixture C). A preferred mixture is Mixture C-1 which generally comprises 11-methyltetracosane in a proportion ranging from 0.1 to 10% in weight; 5-methylpentacosane in a proportion ranging from 3 to 18% in weight; 11-methylpentacosane in a proportion ranging from 27 to 41 % in weight; (Z)-9-pentacosene in a proportion ranging from 11 to 26% in weight; n-pentacosane in a proportion ranging from 19 to 33% in weight; and n-hexacosane in a proportion ranging from 1 to 10% in weight. Mixture C-2 generally comprises from 1 to 5 % by weight of 11-methyltetracosane; from 8 to 13 % by weight of 5-methylpentacosane; from 32 to 36 % by weight of 11-methylpentacosane; from 16 to 21 % by weight of 9-pentacosene; from 24 to 28 % by weight of n-pentacosane; from 2 to 7% by weight of n-hexacosane; from 0,5 to 3% by weight of 5,17-dimethylpentacosane; and from 0,5 to 3% by weight of 5-methyltetracosane.

In order for the effects of hydrocarbon compound mixtures according to the present invention to be significant, the mixture quantity to be used may vary according to the insect species targeted and the intensity of the effect sought. Preferably, 0.000001 to 1 g/m² of hydrocarbon compound mixture according to the present invention will be used. More preferably, 0.00001 to 0.5 g/m² of hydrocarbon compound mixture according to the present invention will be used. Even more preferably, 0.0001 to 0.2 g/m² of hydrocarbon compound mixture according to the present invention will be used. These quantities are equivalent, from a practical point of view, to a quantity of hydrocarbon compound mixture according to the present invention used ranging from 0.0001 to 100 µg/cm², preferably from 0.001 to 50 µg/cm² even more preferably from 0.01 to 20 µg/cm².

Generally, alkenes within the class of hydrocarbon compounds of the invention are cis, or (Z) alkenes, e.g., 9-(Z)-pentacosene.

By the term "termiticidal composition" is meant a composition known to the person of skill in the art of termite control. Typically, such compositions include one or more termiticides or insecticides and appropriate carriers or adjuvants as needed to deliver the termiticide or insecticide to the locus where control is desired. Termiticides or insecticides which may be used according to the present invention include abamectin, acephate, acetamiprid, acrinathrin, alanycarb, aldicarb, allethrin, alpha-cypermethrin, aluminium phosphide, amitraz, azadirachtin, azamethiphos, azinphos-ethyl, azinphos-methyl, bendiocarb, benfuracarb, bensultap, beta-cyfluthrin, beta-cypermethrin, bifenthrin, bioallethrin, bioallethrin S-cyclopentenyl isomer, bioresmethrin, bistrifluron, borax, buprofezin, butocarboxim, butoxycarboxim, cadusafos, calcium cyanide, calcium polysulfide, carbaryl, carbofuran, carbosulfan, cartap, chlordane, chlorethoxyfos, chlorfenapyr, chlorfenvinphos, chlorfluazuron, chlormephos, chloropicrin, chlorpyrifos, chlorpyrifos-methyl, chromafenozide, clothianidin, coumaphos, cryolite, cyanophos, cycloprothrin, cyfluthrin, cyhalothrin, cypermethrin, cyphenothrin, cyromazine, dazomet, deltamethrin, demeton-S-methyl, diafenthiuron, diazinon, dichlorvos, dicrotophos, dicyclanil, diflubenzuron, dimethoate, dimethylvinphos, dW otefuran, disulfoton, emamectin, emamectin benzoate, empenthrin, endosulfan, esfenvalerate, ethiofencarb, ethion, ethiprole, ethoprophos, ethylene dibromide, etofenprox, etoxazole, famphur, fenitrothion, fenobucarb, fenoxycarb, fenpropathrin, fenthion, fenvalerate, fipronil, flonicamid, flucycloxuron, flucythrinate, flufenoxuron, flumethrin, formetanate, formatanate hydrochloride, fosthiazate, furathiocarb, halofenozide, heptachlor, heptenophos, hexafltunuron, hydramethylnon, hydroprene, imidacloprid, imiprothrin, indoxacarb, isofenphos, isoprocarb, isopropyl O-(methoxyaminothiophosphoryl) salicylate, isoxathion, lambda-cyhalothrin, lithium perfluorooctane sulfonate, lufenuron, magnesium phosphide, malathion, mecarbam, mercurous chloride, metaflumizone, metam, metam-sodium, methamidophos, methidathion, methiocarb, methomyl, methoprene, methothrin, methoxychlor, methoxyfenozide, methyl isothiocyanate, metolcarb, mevinphos, milbemectin, monocrotophos, naled, naphthalenic compounds, nicotine, nitenpyram, nithiazine, novaluron, noviflumuron, omethoate, oxamyl, oxydemeton-methyl, parathion, parathion-methyl, pentachlorophenol; pentachlorophenyl laurate, permethrin, petroleum oils, phenothrin, phenthoate, phorate, phosalone, phosmet, phosphamidon, phosphine, phoxim, pirimicarb, pirimiphos-methyl, prallethrin, profenofos, propaphos, propetamphos, propoxur, prothiofos, pymetrozine, pyraclofos, pyrethrins, pyrethrins, pyrethrins, pyridaben, pyridaphenthion, pyrimidifen, pyriproxyfen, quinalphos, resmethrin, rotenone, sabadilla, silafluofen, sodium cyanide, sodium pentachlorophenoxide, spinosad, sulcofuron, sulcofuron-sodium, sulfluramid, sulfotep, sulfuryl fluoride, sulprofos, tau-fluvalinate, tebufenozide, tebupirimfos, teflubenzuron, tefluthrin, temephos, terbufos, tetrachlorvinphos, tetramethrin, tetramethrin, theta-cypermethrin, thiacloprid, thiamethoxam, thiodicarb, thiofanox, thiometon, thiosultap-sodium, tolfenpyrad, tralomethrin, transfluthrin, triazamate, triazophos, trichlorfon, triflumuron, trimethacarb, vamidothion, xylylcarb, zeta-cypermethrin and zinc phosphide.

Fipronil, chlorfenapyr, spinosad, thiamethoxam, imidacloprid, clothianidin, acetamiprid, dinotefuran, flonicamid, nitenpyram, nithiazine, and ethiprole are generally preferred insecticides. More preferably, one or more compounds from the following list may be used in the termiticidal composition: fipronil, chlorfenapyr, spinosad, thiamethoxam, imidacloprid, chlothianidin and ethiprole. Imidacloprid and fipronil are especially preferred.

Insect growth regulators are also considered termiticides within the present invention. Abamectin, azadirachtin, borax, chlorfluazuron, cyromazine, diflubenzuron, emamectin, etoxazole, benzoate, fenoxycarb, flufenoxuron, hexaflumuron, hydroprene, hydromethonon, indoxacarb, lufenuron, methoprene, milbemectin, naphthalenic compounds, noviflumuron, spinosad, teflubenzuron, triflumuron, hydramethylnon, and sulflurimid are generally preferred termiticides. Hexaflumuron, chlorfluazuron, diflubenzuron, hydramethylnon, lufenuron, noviflumuron, and triflumuron are especially preferred.

Among the insecticide compositions preferred according to the invention we can cite, as examples but without limitation thereto, the following compositions:

| Combination | **Mixture #** | **Termiticide** |
|---|---|---|
| 1 | Mixture A | Imidacloprid |
| 2 | Mixture A-1 | Imidacloprid |
| 3 | Mixture A-2 | Imidacloprid |
| 4 | Mixture B | Imidacloprid |
| 5 | Mixture B-1 | Imidacloprid |
| 6 | Mixture B-2 | Imidacloprid |
| 7 | Mixture C | Imidacloprid |
| 8 | Mixture C-1 | Imidacloprid |
| 9 | Mixture C-2 | Imidacloprid |
| 10 | Mixture A | Fipronil |
| 11 | Mixture A-1 | Fipronil |
| 12 | Mixture A-2 | Fipronil |
| 13 | Mixture B | Fipronil |
| 14 | Mixture B-1 | Fipronil |
| 15 | Mixture B-2 | Fipronil |
| 16 | Mixture C | Fipronil |
| 17 | Mixture C-1 | Fipronil |
| 18 | Mixture C-2 | Fipronil |
| 19 | Mixture A | Chlorfenapyr |
| 20 | Mixture A-1 I | Chlorfenapyr |
| 21 | Mixture A-2 | Chlorfenapyr |
| 22 | Mixture B | Chlorfenapyr |
| 23 | Mixture B-1 | Chlorfenapyr |
| 24 | Mixture B-2 | Chlorfenapyr |
| 25 | Mixture C | Chlorfenapyr |
| 26 | Mixture C-1 | Chlorfenapyr |
| 27 | Mixture C-2 | Chlorfenapyr |
| 28 | Mixture A | Spinosad |
| 29 | Mixture A-1 | Spinosad |
| 30 | Mixture A-2 | Spinosad |
| 31 | Mixture B | Spinosad |
| 32 | Mixture B-1 | Spinosad |
| 33 | Mixture B-2 | Spinosad |
| 34 | Mixture C | Spinosad |
| 35 | Mixture C-1 | Spinosad |
| 36 | Mixture C-2 | Spinosad |
| 37 | Mixture A | Thiamethoxam |
| 38 | Mixture A-1 | Thiamethoxam |
| 39 | Mixture A-2 | Thiamethoxam |
| 40 | Mixture B | Thiamethoxam |
| 41 | Mixture B-1 | Thiamethoxam |
| 42 | Mixture B-2 | Thiamethoxam |
| 43 | Mixture C | Thiamethoxam |
| 44 | Mixture C-1 | Thiamethoxam |
| 45 | Mixture C-2 | Thiamethoxam |
| 46 | Mixture A | Ethiprole |
| 47 | Mixture A-1 | Ethiprole |
| 48 | Mixture A-2 | Ethiprole |
| 49 | Mixture B | Ethiprole |
| 50 | Mixture B-1 | Ethiprole |
| 51 | Mixture B-2 | Ethiprole |
| 52 | Mixture C | Ethiprole |
| 53 | Mixture C-1 | Ethiprole |
| 54 | Mixture C-2 | Ethiprole |
| 55 | Mixture A | Indoxacarb |
| 56 | Mixture A-1 | Indoxacarb |
| 57 | Mixture A-2 | Indoxacarb |
| 58 | Mixture B | Indoxacarb |
| 59 | Mixture B-1 | Indoxacarb |
| 60 | Mixture B-2 | Indoxacarb |
| 61 | Mixture C | Indoxacarb |
| 62 | Mixture C-1 | Indoxacarb |
| 63 | Mixture C-2 | Indoxacarb |
| 64 | Mixture A | Chlothianidin |
| 65 | Mixture A-1 | Chlothianidin |
| 66 | Mixture A-2 | Chlothianidin |
| 67 | Mixture B | Chlothianidin |
| 68 | Mixture B-1 | Chlothianidin |
| 69 | Mixture B-2 | Chlothianidin |
| 70 | Mixture C | Chlothianidin |
| 71 | Mixture C-1 | Chlothianidin |
| 72 | Mixture C-2 | Chlothianidin |
| 73 | Mixture A | Hexaflumuron |
| 74 | Mixture A-1 | Hexaflumuron |
| 75 | Mixture A-2 | Hexaflumuron |
| 76 | Mixture B | Hexaflumuron |
| 77 | Mixture B-1 | Hexaflumuron |
| 78 | Mixture B-2 | Hexaflumuron |
| 79 | Mixture C | Hexaflumuron |
| 80 | Mixture C-1 | Hexaflumuron |
| 81 | Mixture C-2 | Hexaflumuron |
| 82 | Mixture A | Lufenuron |
| 83 | Mixture A-1 | Lufenuron |
| 84 | Mixture A-2 | Lufenuron |
| 85 | Mixture B | Lufenuron |
| 86 | Mixture B-1 | Lufenuron |
| 87 | Mixture B-2 | Lufenuron |
| 88 | Mixture C | Lufenuron |
| 89 | Mixture C-1 | Lufenuron |
| 90 | Mixture C-2 | Lufenuron |
| 91 | Mixture A | Noviflumuron |
| 92 | Mixture A-1 | Noviflumuron |
| 93 | Mixture A-2 | Noviflumuron |
| 94 | Mixture B | Noviflumuron |
| 95 | Mixture B-1 | Noviflumuron |
| 96 | Mixture B-2 | Noviflumuron |
| 97 | Mixture C | Noviflumuron |
| 98 | Mixture C-1 | Novifllumuron |
| 99 | Mixture C-2 | Noviflumuron |
| 100 | Mixture A | Triflumuron |
| 101 | Mixture A-1 | Triflumuron |
| 102 | Mixture A-2 | Triflumuron |
| 103 | Mixture B | Triflumuron |
| 104 | Mixture B-1 | Triflumuron |
| 105 | Mixture B-2 | Triflumuron |
| 106 | Mixture C | Triflumuron |
| 107 | Mixture C-1 | Triflumuron |
| 108 | Mixture C-2 | Triflumuron |

By the term "carrier" is meant an organic or inorganic material, which can be natural or synthetic, and which is associated with the active ingredient and which facilitates its application to the locus to be treated. This carrier is thus generally inert and should be agriculturally acceptable, especially on the contemplated or treated locus. The carrier can be solid (clay, silicates, silica, limestone, gypsum, ceramics, resins, wax, fertilizers, etc.) or liquid (water, alcohols, ketones, oil solvents, saturated or unsaturated hydrocarbons, chlorinated hydrocarbons, liquified petroleum gas, *etc.).*

Among the many additives, the compositions of the invention can comprise surfactants as well as other ingredients such as dispersants, stickers, antifoam agents, antifreezing agents, dyestuffs, thickeners, adhesives, protective colloids, penetrating agents, stabilizing agents, sequestering agents, antiflocculating agents, corrosion inhibitors, pigments and polymers.

More generally, the compositions of the invention can contain all kinds of solid or liquid additives which are known in the art of insecticides and insecticidal treatments. The attractant compositions according to the present invention may contain the hydrocarbon compound mixture in very varied proportions depending on the efficacy sought and the insects targeted. Preferably, the composition according to this invention may contain from 0.000001% to 99.99% in weight of the hydrocarbon compound mixture according to the present invention, preferably from 0.0001 % to 99.99% in weight, more preferably from 0.01 to 99.99% in weight of the hydrocarbon compound mixture according to the present invention. The termiticidal compositions generally contain the termiticide(s) in termiticidally effective amounts, that is, in amounts that the person of ordinary skill would know to apply them.

The surfactants can be of the emulsifying or wetting type, ionic or non-ionic. Possible surfactants are salts of polyacrylic or lignosulfonic acids; salts of phenolsulfonic or naphthalenesulfonic acids; polycondensates of ethylene oxide with fatty alcohols or fatty acids or fatty amines or substituted phenols (particularly alkylphenols or arylphenols); ester-salts of sulfosuccinic acids; taurine derivatives, such as alkyl taurates; phosphoric esters; or esters of alcohols or polyoxyethylated phenols. When the spraying vehicle is water, the use of at least one surfactant is generally required because the active ingredients are not water-soluble.

Each of the compositions (a) and (b) can be used in solid or liquid forms.

Solid compositions can be powders for dusting or for dispersion and granules, especially extruded, agglomerated or compacted granules, or granules which have been made by impregnation of a powder.

Liquid compositions or compositions which have to be liquid or dispersed in a liquid when applied include solutions, water-soluble concentrates, emulsifiable concentrates, suspensions, suspension concentrates, suspoemulsions, emulsions, wettable powders or pastes or water-dispersible granules. In order to obtain these wettable powders or dusting powders, it is appropriate to intimately mix the active ingredients and the additives, as by grinding in a mill or similar device. Dispersible granules are generally made by agglomeration of a powder, followed by an appropriate granulation process. The emulsions herein described can be of the oil-in-water or water-in-oil types. Fluidity of the emulsions can range from low viscosities up to high viscosities approaching those of gels.

Among these many compositions or formulations, one skilled in the art can choose the one most appropriate, according to the specific conditions of the treatment problem. It is possible to use either the same of a different form for each of compositions (a) and (b).

In general the compositions (a) and (b) of the present invention are sprayed, drenched, spread, covered, or incorporated in soil or mulch, particularly in the control of termites and other social insects, e.g., ants, cockroaches, earwigs, and locusts. It is preferable that the compositions be substantially non-repellent to the species of pest controlled, particularly to ants and/or termites. The method of application of the compositions of the invention is generally the spraying of a mixture which has been previously made, by dilution of more concentrated formulations according to the invention.

In one embodiment, the compositions (a) and (b) are formed separately, admixed and then applied to the locus. In this embodiment, composition (a) comprises the attractant composition adhered to a substrate that will substantially prevent movement of the attractant composition in the locus. Examples of the substrate include silica, silica gel, fumed silica, aluminosilicates, and salts thereof.

For example, when the locus is soil and the compositions are applied together, the substrate retains the attractant and in a manner detectable by the termites and/or social insects. However, the termiticide, preferably, a water-miscible termiticide, will tend to move downward such that a first location and second location are created according to the invention. That is, the termiticide generally is mobile in soil. By the term mobile is meant that the termiticide is not tightly bound to soil to the extent that the active ingredient may not be moved by water away from the area of original placement. For example, the termiticidal active ingredient may have a water solubility from about 100 mg/L to 5000 mg/L at 20°C, preferably from 200 to 1000 mg/L and most preferably from 300 to 600 mg/L.

In this embodiment, the termiticide generally has an octanol-water coefficient (K_{oc}), as measured under standard conditions, of from 20 to 1000, preferably from 100 to 500, preferably from 120 to 250.

The termiticide generally has a DT₅₀ value, that is the dissipation time required for one-half the initial quantity or concentration of a pesticide to dissipate from a locus, of from 50 days to 1000 days, preferably from 50 to 500 days.

The termiticide generally is generally stable in mildly acidic, neutral and mildly basic conditions, that is generally from pH 4-10, preferably from pH 5-9. Preferably the log P_{ow} is from 0.1 to 1.5, preferably from 0.25 to 1.3. The log P_{ow}, is the base-10 log of the octanol water partition coefficient which is greater than zero (0) at 20°C.

The termiticide may be an antagonist or agonist of the nicotinergic acetylcholine receptor of an insect. Examples of water miscible insecticides suitable for the invention include the cloronicotinyl insecticides, e.g., imidacloprid, thiamethoxam, clothianidin, or dinitofuran,

Generally the locations at which each composition is applied are substantially proximate to each other. For example, the locations are generally abutting or adjacent to each other or they may be offset one from the other by a given distance. In a preferred embodiment, such that the locations of each composition are preferably sufficiently close to each other that termites attracted by the attractant can also reach the termiticidal composition. The locations may be offset one from the other by a distance of from about 2 meters to 7 meters, preferably from about 1 meter to 2 meters, more preferably from about 0.1 meter to 1 meter and most preferably from about 5 mm to 50 mm. It is generally preferred that the locations are abutting each other.

When the locations are offset by about 1 meter or less, a connecting member may be used to link the locations. Such a member may serve as a guide for directing termite tunneling activity and thus facilitate termite movement between the locations. The member, or link, may also be other suitable surfaces or structures already existing at site of desired treatment that would serve as tactile guides for directing termite tunneling activity and thus termite movement between linked locations. Examples of the member may be structures such as foundation walls, stone or masonry sidewalks and patios, stucco or other veneer-like structural coatings, garden bed edging, wood or cellulose form boards, urethane or polystyrene foam based construction materials, utility pipes, cables, wires, mulch beds, irrigation lines, tree roots, and other substantially continuous structures that would serve as a tactile guide means between adjacent placements of termite attractant and the termiticidal composition.

The first and/or second locations of the locus may comprise a termite bait. Suitable termite baits include cellulose or celluose-derived materials such as wood, cardboard, paper and the like. Suitable materials useful as termite baits are known to the person of skill in the art. Bait constituents are also contemplated in the compositions of the present invention. Nutritional feeding stimulants, e.g., fatty acids, amino acids, sugars, carbohydrates, pectins, starches, salts, chitins, essential plant oils and the like are included.

The locations of the compositions at the locus may be in the form of bands substantially proximate to one another. It is generally preferred that the bands be parallel. In another embodiment of the invention, the bands may cross or overlap at discrete locations as opposed to being substantially applied within the same location. The locations may overlap to generally less than 50% of the area or breadth of a single location.

In another embodiment of the present invention, the first location may substantially surround the second location or the second location may substantially surround the first location. The locations are proximate to one another and may abut or be adjacent to one another or the locations may be offset one from the other by a given distance. The locations may be shaped as concentric annuluses, or as a central location surrounded by an outer location. For example, a termite bait may have the attractant composition sprayed around, but not on, the bait. In another example, the soil surrounding a termite bait station may be treated with attractant composition.

The present invention also provides a device having at least two distinct faces, one face of which is treated with and/or coated with and/or impregnated with a termite attracting amount of an attractant composition according to the present invention. A second face optionally comprises a termiticidally effective amount of a termiticidal composition. Examples of such devices include a planar sheet shaped in any suitable form having a defined thickness; a hollow globe having an inside and outside surface, which globe may optionally have a hole allowing the inside and outside surfaces to be in communication one with another; and a device which is a polyhedron having n faces (or a polyhedron-like shape with, for example, non-planar faces and/or rounded corners), one or more faces of which may be treated with attractant composition and another treated with a termiticidal composition. It is possible for any face of such devices to be treated with both compositions at two different locations on the same face.

The present invention also provides a composite termite control product comprising:
(a) a flowable medium containing a termite attracting amount of a composition hereinbefore defined; and
(b) a flowable medium containing a termiticidal composition;
which media are enclosed within a container but separated from each other by a partition united to the container under the condition that the media are separated from each other with no contact when out of use, and are dispensed from the container when in use (for example, by squeezing), in such a manner that the media are proximate to each other.

The composite product may be applied to a locus where termites are expected or need to be controlled. Generally the media, when in use, are forced together in one stream of flowable product and the media are abutted but not mixed. Alternatively, the media may be placed in use in two different flowable streams but adjacent one to the other.

The present invention also provides a composite termite control product comprising:
(a) a composition of termite attractant as hereinbefore defined;
(b) a termiticidal composition;
wherein the composition of termite attractant and the termiticidal composition are separately enclosed in or within water-soluble or water dispersible material separated one from each other and connected by a link. Generally the link is shaped or formed from a portion of water-soluble or water dispersible material. The link may also be of another suitable substance, for example twine or string or filament. The link may also be of another suitable substance and structure to serve as a tactile guide for directing termite tunneling activity and thus termite movement between linked packages. It may be preferable to use a biodegradable material. The link may also be other suitable surfaces or structures already existing at location of desired treatment that would serve as tactile guides for directing termite tunneling activity and thus termite movement between linked applications or packages. Examples of this may be structures such as foundation walls, stone or masonry sidewalks and patios, stucco or other veneer-like structural coatings, garden bed edging, wood or cellulose form boards, urethane or polystyrene foam based construction materials, utility pipes, cables, wires, mulch beds, irrigation lines, tree roots, and other substantially continuous structures that would serve as a tactile guiding link between separate placements of termite attractant and the termiticidal composition.

Such water-soluble or water dispersible materials are described in European Patent Publications EP 347222 A1, EP 347221 A1, EP 347220 A1, and EP 347119 A and are generally known to those of ordinary skill in the art. Polyvinyl alcohols are especially preferred water dispersible materials.

The present invention also provides a termite control product comprising a termiticidal composition wherein the termiticidal composition is enclosed by or incorporated into a water-soluble or water dispersible material provided that the water-soluble or water dispersible material is not shaped to receive and enclose the composition in the form of a sachet or bag. Such bags and sachets are described in EP 347222 A1, EP 347221 A1, EP 347220 A1, and EP 347119 A1.

In a preferred embodiment, the termiticidal composition and a water-dispersible material are admixed and transformed into a shaped article wherein the termiticidal composition is distributed generally uniformly about and/or within the article. For example, a granular composition of the termiticide may be heated with polyvinyl alcohol and extruded from an apparatus to provide a rope, strip, band or sheet of the product of the invention.

In another embodiment, a termiticidal composition may be enclosed by two layers or laminates of water dispersible material such that the composition is sandwiched between the layers. The termiticidal composition may be in solid (e.g. granular) or laminate form. For example, a sheet of polyvinylalcohol may be laminated on one face with the termiticidal composition and the laminate of termiticidal composition laminated with polyvinyl alcohol. The edges of the sheet may be sealed or laminated with polyvinyl alcohol thus enclosing the termiticidal composition.

In the previous two embodiments, or another embodiment in this specification and claims, the attractant composition of the invention may be used with the termidicidal composition together or separately. If used separately as in the previous two embodiments, for example, a region of water-dispersible material may separate the termiticidal and attractant compositions. However, the attractant composition may be applied separately at the locus, proximate to the termiticidal composition.

In another embodiment, the termiticidal composition and/or the water dispersible material may be designed or shaped to provide a controlled degradation release of the termiticide.

In one embodiment, the such water dispersible materials are described in European Patent Publications EP 347222 A1, EP 347221 A1, EP 347220 A1, and EP 347119 A1 and are generally known to those of ordinary skill in the art.

### EXAMPLES

### Example 1

A trench of V-cross section is prepared around a house designated to be protected from termites. A liquid formulation of 11-methyltetracosane, 5-methylpentacosane, 11-methylpentacosane, 9-(Z)-pentacosene, n-pentacosane, n-hexacosane, 5,17-dimethylpentacosane and 5-methyltetracosane in appropriate amounts is sprayed on one face of the trench and a composition of fipronil is sprayed on the other. The trench is closed. One week later termites are found foraging in the trench from one colony of termites. Four weeks after spraying there are no termites found in the area of the trench.

### Example 2

A Sentricon® termite bait and control station (Dow Agrosciences, USA) is placed in the ground. A liquid formulation of 11-methyltetracosane, 5-methylpentacosane, 11-methylpentacosane, 9-(Z)-pentacosene, n-pentacosane, n-hexacosane, 5,17-dimethylpentacosane and 5-methyltetracosane is sprayed on the soil around the station. Another Sentricon® station is used as a control. Four weeks after spraying, more termites are found to have investigated the Sentricon station around which the formulation was sprayed than in the control.

### Example 3

A paste of cellulose acetate and a mixture of 11-methyltetracosane, 5-methylpentacosane, 11-methylpentacosane, 9-Z-pentacosene, n-pentacosane, n-hexacosane, 5,17-dimethylpentacosane and 5-methyltetracosane is enclosed in a compartment of a squeezable tube (having a narrow neck and hole at the end of the neck forming a passageway) and separated from a flowable paste of imidacloprid (0.05%) in another compartment. When the tube is squeezed, the two pastes are forced of the tube together through the neck and out the hole in a two-component composite paste which components are substantially unmixed.

### Example 4

A liquid termiticidal treatment of a reduced, but effective, concentration PREMISE 75WP is injected to the depth of 1 foot at 12 inch interval spacing, using standard commercial application equipment, at a reduced, but effective, application volume against the outside foundation walls of a structure to be protected. In a separate second application, non-toxic bait stakes composed of a compressed solid matrix of cellulose powder blended with a low concentration of sucrose and a pre-applied vertical strip of a surface treatment of 11-methyltetracosane, 5-methylpentacosane, 11-methylpentacosane, z-9-pentacosene, n-pentacosane, n-hexacosane, 5,17-dimethylpentacosane and 5-methyltetracosane in appropriate amounts, is placed in the soil within 1 foot of the injected termiticidal solution at 3 foot intervals. One week later sick and intoxicated termites are found emerging from the ground in the vicinity of the bait stakes. Four weeks after spraying there are no termites found in the area of the treatments.

### Example 5

Polyvinyl alcohol and imidacloprid (in the form of Premise 75WP) are heated and extruded by an appropriate extrusion device to provide a 500 foot ribbon of 4 inches width and 0.1 inches thickness. The ribbon is dried. Final analysis shows that the ribbon provides a dose of about 0.5 to 0.9 grams of imidacloprid per linear foot of ribbon.

### Example 6

(A) Preparation of the arrestant composition: A mixture of 5-methylpentacosane, 11-methylpentacosane, 9-Z-pentacosene, n-pentacosane, and n-hexamethylcosane in proportion of about 11.4:36.3:19.6: 27.7: 5.0 as a 0.06% (by weight) solution in acetone (0.06 g) was diluted into acetone and mixed with 149.4 g of Zeolex® 7A brand silica (J.M. Huber, Inc. USA) The acetone was removed by evaporation at 50°C at 3.5 mm Hg to provide a smooth flowable powder. The powder was mixed with 850 g of Premise® 75WP (imidacloprid active ingredient), and milled to a consistent appearance.
(B) Use of the Arrestant Composition of Part (A): The final product is distributed in soil. After several months, the imidacloprid moves downward while the composition of attractants remains adhered to the silica gel. Termites are attracted to the mixture of hydrocarbons adsorbed to the silica and tunnel through the termiticide.

### Example 7

A linear chain of polyvinyl alcohol pouches, linked by a band of polyvinyl alcohol, is filled alternatively with imidacloprid in the form of Premise 75 WP (Bayer CropScience LP, USA) and the arrestant composition of Example 6. That is, every other pouch contains imidacloprid and every other pouch contains the arrestant composition. The chain is buried in a trench. The polyvinyl alcohol disperses and the arrestant and imidacloprid are released.

## Claims

1. A method of controlling termites and other social insects at a locus which comprises:
(a) providing a composition of termite attractant comprising a mixture of hydrocarbon compounds chosen as being alkanes or alkenes comprising from 20 to 40 carbon atoms;
(b) providing a termiticidal composition;
(c) forming at the locus a first location treated with the composition of termite attractant in an amount effective for attracting the termites; and
(d) forming at the locus a second location treated with a termiticidally effective amount of the termiticidal composition wherein the second location is proximate to the first location.

2. The method according to Claim 1 wherein the either or both of the compositions are sprayed on soil.

3. The method according to Claim 1 wherein either or both of the compositions are incorporated in soil.

4. The method according to Claim 1 wherein the termiticidal composition is substantially non-repellent to termites.

5. The method according to Claim 1 wherein first location is surrounded by the second location.

6. The method according to Claim 1 wherein the first location further comprises a termite bait.

7. The method according to Claim 1 wherein the second location further comprises a termite bait.

8. The method according to Claim 1 wherein the first location is adjacent to two or more second locations.

9. A method of controlling termites at a locus according to claim 1 wherein the two locations treated in steps (c) and (d) are each in the form of a band.

10. A method of controlling termites at a locus according to claim 1 wherein the location formes in step (d) substantially surrounds the first location formed in step (c).

11. The method according to Claim 10 wherein the first location is in or on or soil.

12. The method according to Claim 10 wherein the first location further comprises a termite monitoring and/or control device.

13. A device for attracting or controlling termites or other social insects comprising at least two distinct faces, one face of which is treated with and/or coated with and/or impregnated with a termite attracting amount of an attractant composition as defined in Claim 1 and in which a second distinct face is treated with and/or coated with and/or impregnated with an effective amount of a termiticidal composition as defined in Claim 1 which second distinct face is not treated with and/or coated with and/or impregnated with a termite attracting amount of an attractant composition.

14. A composite termite control product comprising:
(a) a flowable medium containing a termite attracting amount of a composition as defined in Claim 1; and
(b) a flowable medium containing a termiticidal composition as defined in Claim 1.

15. A composite termite control product comprising:
(a) a composition of termite attractant as defined in Claim 1;
(b) a termiticidal composition as defined in Claim 1,
wherein the composition of termite attractant and the termiticidal composition are separately enclosed in water-soluble or water dispersible material separated one from each other and connected by a link.

16. The composite termite control product of Claim 15 wherein the link is formed from water-soluble or water dispersible material.

17. A method of controlling termites co mprising admixing a termiticidal composition comprising a water miscible termiticide; and an attractant composition as described in Claim 1; applying the product to the soil; and over time allowing the water miscible termiticide in the termiticidal composition to flow away from the soil so treated thus forming at a first location a termiticidal zone and at a second location, a termite attractant zone.

18. A method according to claim 1, wherein the termite attractant is selected from one of the following mixtures (a) to (f):
(a) a mixture comprising 11-methylpentacosane in a proportion ranging from 36 to 51% in weight; (Z)-9-pentacosene in a proportion ranging from 16 to 31 % in weight; and n-pentacosane in a proportion ranging from 26 to 41 % in weight;
(b) a mixture comprising 41 to 46 % by weight of 11-methylpentacosane; from 21 to 26 % by weight of 9-pentacosene; and from 31 to 35 % by weight of n-pentacosane;
(c) a mixture comprising 5-methylpentacosane in a proportion ranging from 4 to 19% in weight; 11-methylpentacosane in a proportion ranging from 29 to 43% in weight; (Z)-9-pentacosene in a proportion ranging from 12 to 27% in weight; n-pentacosane in a proportion ranging from 20 to 35% in weight; and n-hexacosane in a proportion ranging from 1 to 10% in weight;
(d) a mixture comprising from 9 to 14 % by weight of 5-methylpentacosane; from 34 to 38 . % by weight of 11-methylpentacosane; from 17 to 22 % in weight of 9-pentacosene; from 25 to 30 % in weight of n-pentacosane; and from 3 to 7% in weight of n-hexacosane
(e) a mixture comprising 11-methyltetracosane in a proportion ranging from 0.1 to 10% in weight; 5-methylpentacosane in a proportion ranging from 3 to 18% in weight; 11-methylpentacosane in a proportion ranging from 27 to 41 % in weight; (Z)-9-pentacosene in a proportion ranging from 11 to 26% in weight; n-pentacosane in a proportion ranging from 19 to 33% in weight;
(f) a mixture comprising 1 to 5 % by weight of 11-methyltetracosane; from 8 to 13 % by weight of 5-methylpentacosane; from 32 to 36 % by weight of 11-methylpentacosane; from 16 to 21 % by weight of 9-pentacosene; from 24 to 28 % by weight of n-pentacosane; from 2 to 7% by weight of n-hexacosane; from 0,5 to 3% by weight of 5,17-dimethylpentacosane; and from 0,5 to 3% by weight of 5-methyltetracosane;

19. A composite termite control product according to claim 14, wherein the termite attracting composition contained in component (a) is selected from the mixtures (a) to (f) according to claim 18.

## Patentansprüche

1. Verfahren zur Bekämpfung von Termiten und anderen sozialen Insekten an einem Ort, wobei das Verfahren Folgendes umfasst:
(a) Bereitstellung einer Termitenlockstoffzusammensetzung, die ein Gemisch von Kohlenwasserstoffverbindungen umfasst, die aus Alkanen oder Alkenen mit 20 bis 40 Kohlenstoffatomen ausgewählt sind;
(b) Bereitstellung einer Termitizidzusammensetzung;
(c) Ausbildung einer mit der Termitenlockstoffzusammensetzung in einer für das Anlocken von Termiten wirksamen Menge behandelten ersten Stelle an dem Ort; und
(d) Ausbilden einer mit der Termitizidzusammensetzung in einer zur Bekämpfung der Termiten wirksamen Menge behandelten zweiten Stelle an dem Ort, wobei die zweite Stelle sich in der Nähe der ersten Stelle befindet.

2. Verfahren nach Anspruch 1, worin eine oder beide Zusammensetzungen auf den Boden gesprüht werden.

3. Verfahren nach Anspruch 1, worin eine oder beide Zusammensetzungen in den Boden eingeführt werden.

4. Verfahren nach Anspruch 1, worin die Termitizidzusammensetzung Termiten im Wesentlichen nicht abschreckt.

5. Verfahren nach Anspruch 1, worin die erste Stelle von der zweiten Stelle umgeben ist.

6. Verfahren nach Anspruch 1, worin die erste Stelle ferner ein Termitenködermittel umfasst.

7. Verfahren nach Anspruch 1, worin die zweite Stelle weiters ein Termitenködermittel umfasst.

8. Verfahren nach Anspruch 1, worin die erste Stelle neben zwei oder mehreren zweiten Stellen angeordnet ist.

9. Verfahren zur Termitenbekämpfung an einem Ort nach Anspruch 1, worin die beiden Stellen, die in den Schritten (c) und (d) behandelt werden, beide die Form eines Bands aufweisen.

10. Verfahren zur Termitenbekämpfung an einem Ort nach Anspruch 1, worin die in Schritt (d) ausgebildete Stelle die in Schritt (c) ausgebildete erste Stelle im Wesentlichen umgibt.

11. Verfahren nach Anspruch 10, worin die erste Stelle in oder auf dem Boden vorliegt.

12. Verfahren nach Anspruch 10, worin die erste Stelle weiters eine Termitenüberwachungs- und/oder -bekämpfungsvorrichtung umfasst.

13. Vorrichtung zum Anlocken oder zur Bekämpfung von Termiten oder anderen sozialen Insekten, die zumindest zwei voneinander getrennte Flächen umfasst, wobei eine Fläche mit einer wie in Anspruch 1 definierten Lockstoffzusammensetzung in einer Termiten anlockenden Menge behandelt und/oder beschichtet und/oder imprägniert ist und eine zweite separate Fläche mit einer wirksamen Menge einer wie in Anspruch 1 definierten Termitizidzusammensetzung behandelt und/oder beschichtet und/oder imprägniert ist, wobei die zweite separate Fläche nicht mit einer Lockstoffzusammensetzung in einer Termiten anlockenden Menge behandelt und/oder beschichtet und/oder imprägniert ist.

14. Gemischtes Termitenbekämpfungsprodukt, das Folgendes umfasst:
(a) ein fließfähiges Medium, das eine wie in Anspruch 1 definierte Zusammensetzung in einer Termiten anlockenden Menge enthält; und
(b) ein fließfähiges Medium, das eine wie in Anspruch 1 definierte Termitizidzusammensetzung enthält.

15. Gemischtes Termitenbekämpfungsprodukt, das Folgendes umfasst:
(a) eine wie in Anspruch 1 definierte Termitenlockstoffzusammensetzung;
(b) eine wie in Anspruch 1 definierte Termitizidzusammensetzung;
worin die Termitenlockstoffzusammensetzung und die Termitizidzusammensetzung getrennt voneinander in wasserlöslichem oder wasserdispergierbarem Material eingeschlossen und voneinander getrennt und durch eine Verbindung verbunden sind.

16. Gemischtes Termitenbekämpfungsprodukt nach Anspruch 15, worin die Verbindung aus einem wasserlöslichen oder wasserdispergierbaren Material besteht.

17. Verfahren zur Bekämpfung von Termiten, das das Vermischen einer Termitizidzusammensetzung, die ein wassermischbares Termitizid umfasst, und einer wie in Anspruch 1 beschriebenen Termitenlockstoffzusammensetzung; das Aufbringen des Produkts auf den Boden und das Ermöglichen des Abfließens des wassermischbaren Termitizids in der Termitizidzusammensetzung aus dem so behandelten Boden im Verlauf der Zeit umfasst, wodurch an einer ersten Stelle eine Termitizidzone und an einer zweiten Stelle eine Termitenlockstoffzone ausgebildet wird.

18. Verfahren nach Anspruch 1, worin der Termitenlockstoff aus einem der folgenden Gemische (a) bis (f) ausgewählt ist:
(a) einem Gemisch, umfassend 11-Methylpentacosan in einem Anteil von 36 bis 51 Gew.-%, (Z)-9-Pentacosen in einem Anteil von 16 bist 31 Gew.-% und n-Pentacosan in einem Anteil von 26 bis 41 Gew.-%;
(b) einem Gemisch, umfassend 41 bis 46 Gew.-% 11-Methylpentacosan, 21 bis 26 Gew.-% 9-Pentacosen und 31 bis 35 Gew.-% n-Pentacosan;
(c) einem Gemisch, umfassend 5-Methylpentacosan in einem Anteil von 4 bis 19 Gew.-%, 11-Methylpentacosan in einem Anteil von 29 bis 43 Gew.-%, (Z)-9-Pentacosen in einem Anteil von 12 bis 27 Gew.-%, n-Pentacosan in einem Anteil von 20 bis 35 Gew.-% und n-Hexacosan in einem Anteil von 1 bis 10 Gew.-%;
(d) einem Gemisch, umfassend 9-14 Gew.-% 5-Methylpentacosan, 34 bis 38 Gew.-% 11-Methylpentacosan, 17 bis 22 Gew.-% 9-Pentacosen, 25 bis 30 Gew.-% n-Pentacosan und 3 bis 7 Gew.-% n-Hexacosan;
(e) einem Gemisch, umfassend 11-Methyltetracosan in einem Anteil von 0,1 bis 10 Gew.-%, 5-Methylpentacosan in einem Anteil von 3 bis 18 Gew.-%, 11-Methylpentacosan in einem Anteil von 27 bis 41 Gew.-%, (Z)-9-Pentacosen in einem Anteil von 11 bis 26 Gew.-%, n-Pentacosan in einem Anteil von 19 bis 33 Gew.-%;
(f) einem Gemisch, umfassend 1 bis 5 Gew.-% 11-Methyltetracosan, 8 bis 13 Gew.-% 5-Methylpentacosan, 32 bis 36 Gew.-% 11-Methylpentacosan, 16 bis 21 Gew.-% 9-Pentacosen, 24 bis 28 Gew.-% n-Pentacosan, 2 bis 7 Gew.-% n-Hexacosan, 0,5 bis 3 Gew.-% 5,17-Dimethylpentacosan und 0,5 bis 3 Gew.-% 5-Methyltetracosan.

19. Gemischtes Termitenbekämpfungsprodukt nach Anspruch 14, worin die in Komponente (a) enthaltene Termitenlockstoffzusammensetzung aus den Gemischen (a) bis (f) nach Anspruch 18 ausgewählt ist.

## Revendications

1. Procédé pour lutter contre les termites et d'autres insectes sociaux dans un milieu, qui comprend les étapes consistant à :
(a) fournir une composition d'un agent attractif pour les termites, comprenant un mélange de composés hydrocarbonés choisis de manière à consister en alcanes ou alcènes comprenant 20 à 40 atomes de carbone ;
(b) fournir une composition termiticide ;
(c) former dans le milieu un premier emplacement traité avec la composition d'agent attractif pour les termites, en une quantité efficace pour attirer les termites ; et
(d) former dans le milieu un second emplacement traité avec une quantité, efficace du point de vue termiticide, de la composition termiticide, le second emplacement étant proche du premier emplacement.

2. Procédé suivant la revendication 1, dans lequel l'une des, ou les deux compositions sont pulvérisées sur le sol.

3. Procédé suivant la revendication 1, dans lequel l'une des, ou les deux compositions sont incorporées au sol.

4. Procédé suivant la revendication 1, dans lequel la composition termiticide est pratiquement non répulsive pour les termites.

5. Procédé suivant la revendication 1, dans lequel le premier emplacement est entouré par le second emplacement.

6. Procédé suivant la revendication 1, dans lequel le premier emplacement comprend en outre un appât pour les termites.

7. Procédé suivant la revendication 1, dans lequel le second emplacement comprend en outre un appât pour les termites.

8. Procédé suivant la revendication 1, dans lequel le premier emplacement est adjacent à deux ou plus de deux seconds emplacements.

9. Procédé pour lutter contre les termites dans un milieu suivant la revendication 1, dans lequel les deux emplacements traités dans les étapes (c) et (d) sont chacun sous forme d'une bande.

10. Procédé pour lutter contre les termites dans un milieu suivant la revendication 1, dans lequel l'emplacement formé dans l'étape (d) entoure substantiellement le premier emplacement formé dans l'étape (c).

11. Procédé suivant la revendication 10, dans lequel le premier emplacement est dans ou sur le sol.

12. Procédé suivant la revendication 10, dans lequel le premier emplacement comprend en outre un dispositif de contrôle et/ou de lutte contre les termites.

13. Dispositif pour attirer ou lutter contre les termites ou d'autres insectes sociaux, comprenant au moins deux faces distinctes dont une face est traitée avec une, et/ou revêtue d'une, et/ou imprégnée avec une, quantité attractive pour les termites d'une composition attractive telle que définie dans la revendication 1, et dans lequel une seconde face distincte est traitée avec une, et/ou revêtue d'une, et/ou imprégnée d'une, quantité efficace d'une composition termiticide telle que définie dans la revendication 1, seconde face distincte qui n'est pas traitée avec une, et/ou revêtue d'une, et/ou imprégnée avec une, quantité attractive pour les termites d'une composition attractive.

14. Produit composite pour lutter contre les termites, comprenant :
(a) un milieu fluide contenant une quantité, attractive pour les termites, d'une composition telle que définie dans la revendication 1 ; et
(b) un milieu fluide contenant une composition termiticide telle que définie dans la revendication 1.

15. Produit composite pour lutter contre les termites, comprenant:
(a) une composition d'un agent attractif pour les termites tel que défini dans la revendication 1 ;
(b) une composition termiticide telle que définie dans la revendication 1 ;
dans lequel la composition de l'agent attractif pour les termites et la composition termiticide sont enfermées séparément dans une matière hydrosoluble ou dispersible dans l'eau à l'état séparé l'une de l'autre et connecté par un système de liaison.

16. Produit composite pour lutter contre les termites suivant la revendication 15, dans lequel le système de liaison est formé d'une matière hydrosoluble ou dispersible dans l'eau.

17. Procédé pour lutter contre les termites, comprenant les étapes consistant à mélanger une composition termiticide comprenant un termiticide miscible à l'eau et une composition attractive telle que décrite dans la revendication 1 ; à appliquer le produit au sol ; et, au cours du temps, à laisser le termiticide miscible à l'eau présent dans la composition termiticide se répandre hors du sol ainsi traité, en formant ainsi à un premier emplacement une zone termiticide et, à un second emplacement, une zone attractive pour les termites.

18. Procédé suivant la revendication 1, dans lequel l'agent attractif pour les termites qui est choisi est un des mélanges (a) à (f) suivants :
(a) un mélange comprenant du 11-méthylpentacosane en une proportion comprise entre 36 et 51 % en poids ; du (Z)-9-pentacosène en une proportion comprise entre 16 et 31 % en poids ; et du n-pentacosane en une proportion comprise entre 26 et 41 % en poids;
(b) un mélange comprenant 41 à 46 % en poids de 11-méthylpentacosane ; 21 à 26 % en poids de 9-pentacosène; et 31 à 35 % en poids de n-pentacosane ;
(c) un mélange comprenant du 5-méthylpentacosane en une proportion comprise entre 4 et 19 % en poids ; du 11-méthylpentacosane en une proportion comprise entre 29 et 43 %; du (Z)-9-pentacosène en une proportion comprise entre 12 et 27 % en poids ; du n-pentacosane en une proportion comprise entre 20 et 35 % en poids ; et du n-hexacosane en une proportion comprise entre 1 et 10 % en poids ;
(d) un mélange comprenant 9 à 14 % en poids de 5-méthylpentacosane ; 34 à 38 % en poids de 11-méthylpentacosane ; 17 à 22 % en poids de 9-pentacosène ; 25 à 30 % en poids de n-pentacosane ; et 3 à 7 % en poids de n-hexacosane ;
(e) un mélange comprenant du 11-méthyltétracosane en une proportion comprise entre 0,1 et 10 % en poids ; du 5-méthylpentacosane en une proportion comprise entre 3 et 18 % en poids ; du 11-méthylpentacosane en une proportion comprise entre 27 et 41 % en poids ; du (Z)-9-pentacosène en une proportion comprise entre 11 et 26 % en poids ; du n-pentacosane en une proportion comprise entre 19 et 33 % en poids ;
(f) un mélange comprenant 1 à 5 % en poids de 11-méthyltétracosane ; 8 à 13 % en poids de 5-méthylpentacosane ; 32 à 36 % en poids de 11-méthylpentacosane ; 16 à 21 % en poids de 9-pentacosène ; 24 à 28 % en poids n-pentacosane ; 2 à 7 % en poids de n-hexacosane ; 0,5 à 3 % en poids de 5,17-diméthylpentacosane ; et 0,5 à 3 % en poids de 5-méthyltétracosane.

19. Produit composite pour lutter contre les termites suivant la revendication 14, dans lequel la composition attractive pour les termites présente dans le constituant (a) est choisie parmi les mélanges (a) à (f) suivant la revendication 18.
